# EUROPEAN PATENT SPECIFICATION

(11) **EP 2 353 285 B1**
(45) Date of publication and mention of the grant of the patent: **08.11.2017**
(21) Application number: 09787309.5
(22) Date of filing: 24.07.2009
(51) Int. Cl.: H04M 3/56

(54) **METHOD TO MANAGE GROUP CALLS**
VERFHAREN ZUR HANDHABUNG VON GRUPPENANRUFE
PROCÉDÉ DE GESTION D'APPELS DE GROUPE DANS UN SYSTÈME DE TÉLÉCOMMUNICATION

(30) Priority: 08.08.2008 US 87448 P
(43) Date of publication of application: 10.08.2011
(73) Proprietor: Orange, 75015 Paris (FR)
(72) Inventor: MOURYA, Manoj, Fremont CA 94539 (US); KALONJI, Ndiata, F-35136 Saint Jacques De La Lande (FR)
(86) International application number: PCT/IB2009/054226
(87) International publication number: WO 2010/016041

(56) References cited:
- WO-A-2004/114643
- DE-A1- 10 030 189
- US-A1- 2004 047 460
- US-A1- 2005 192 041

## Description

### FIELD OF THE PRESENT SYSTEM:

The present invention generally relates to communications using mobile or fixed devices in telecommunication networks, and more specifically to enhanced communications services.

### BACKGROUND OF THE PRESENT SYSTEM:

Mobile phones have become an important addition to our daily life. A mobile phone or device is generally a subscriber to a telecommunication network in order to enjoy communication services, such as voice, data, etc. Whether one refers to mobile or fixed telephony, most calls are generally one to one calls, i.e. calls between the communication devices of two parties or end points.

When it comes to a call between more than two parties, here after referred to as a group or community call, many solutions are available today. These group calls, available through call conferencing applications are more commonly used in the business world, and remain to this day not user friendly enough forthe consumer market.

Consumer telephone still remains as a communication tool for one user to reach another user. Solutions like "Push to talk" have been launched in the recent past to offer groupe call to users. Push-to-talk is a method of communicating on half-duplex (on end point talking at a time) communication lines using a unique phone key to switch from voice reception mode to transmit mode. This solution remains nonetheless confidential in use as the phones must be compatible for the solution to be implemented. Furthermore, only one user at a time can talk, something which is limiting to the exchange of information.

A group call may be initiated by a user through calling each end point of the group call one after the other and having them to join the call. This solution requires nonetheless multiple calls and can take time if the group is fairly large. solution requires nonetheless multiple calls and can take time if the group is fairly large.

US 5,506,890 incorporated herein as if set out in its entirety discloses a method for a group call wherein the calling end point initiates the group call by calling a unique number assigned the group call. Depending on the selected end points that will form the group, further calls are then placed to these end points. The communication is then established between the group. In this solution, even though the initiator (or calling end point) of the group call is calling only one number, he/she must request a dedicated number prior to the group call. This is indeed similar to the known solution for call conferencing applications in the business world. Furthermore, the initiator then provides the list of recipient end points that will form with himself the group. In other words, the user still has to call a number and does not have the feeling of calling a group in one call.

Documents US2004047460 and US2005192041 teach a method for a group call between a calling end point and a group of recipient end points.

Document D1 further teaches a method that comprises receiving a first call from the calling end point, the call comprising a call setup message with an identifier for the group of recipient end points, allocating a bridge to the group call, and processing second calls to the recipient end points. The first and second calls are then binded.

Today there is still a need for a simple solution that allows a user to easily initiate a group call through a mechanism transparent to him. There is a further need for a group call solution that gives this user the impression of calling the group.

### SUMMARY OF THE PRESENT SYSTEM AND METHOD:

It is an object of the present system, processor and method to overcome disadvantages and/or make improvements in the prior art.

To that extent, the present method proposes a method for establishing a group call from a calling end point to a group of recipient end points, the method comprising the acts of receiving a group call setup message from the sent by the calling end point. The present method seen from the calling end point is a two phase method as the calling end point first sends the set up message, and when upon receiving the allocated temporary end point, it will place a call to this temporary end point. A unique end point is indeed called from the calling end point (the temporary end point), but the user is unaware of it.

The temporary end point allocated to this call allows to build the communication path between the group end points using switching centers. The group call setup message is the message triggering the present method, and it comprises the necessary parameters to process the first and second calls using the allocated temporary end point.

A calling end point in accordance with the present system for establishing a group call to a group of recipient end points may be arranged to send a group call setup message, the group call setup message comprising at least one identifier for the group of recipient end points, receive contact data for a temporary end point allocated to the group call, and call the temporary end point.

A group call service platform for establishing a group call from a calling end point to a group of recipient end points according to the present system may be arranged to receive a group callsetup message from the calling end point, the group call setup message comprising at least one identifier for the group of recipient end points, send contact data fora temporary end point allocated to the calling end point, process a first call from the calling end point to the temporary end point, process second calls to each recipient end of the group of recipient end points using the at least one identifier, and join the first and second calls to generate a group call from the calling end point to each of the recipient end points.

A telecommunication system in accordance with the present system may comprise a group of recipient end points, a calling end point, and, a group call service platform for establishing a group call from the calling end point to the group of recipient end points, the calling end point being arranged to send a group call setup message, the group call setup message comprising atleastone identifier for the group of recipient end points, receive contact data for a temporary end point allocated to the group call, call the temporary end point, and the group call service platform being arranged to receive the group call setup message from the calling end point, send the contact data for the temporary end point allocated to the calling end point to the calling end point, process the call from the calling end point to the temporary end point, process second calls to each recipient end of the group of recipient end points using the at least one identifier, join the call from the calling end point and the second calls to generate a group call from the calling end point to each of the recipient end points.

An application embodied on a computer readable medium in accordance with the present system may be arranged to establish a group call from a calling end point to a group of recipient end points, the application comprising a portion to receive a group call setup message from the calling end point, the group call setup message comprising at least one identifier for the group of recipient end points, a portion to send contact data for a temporary end point allocated to the calling end point, a portion to process a first call from the calling end point to the temporary end point, a portion to process second calls to each recipient end of the group of recipient end points using the at least one identifier, and a portion to join the first and second calls to generate a group call from the calling end point to eachofthe recipient end points.

### BRIEF DESCRIPTION OF THE DRAWINGS:

The present system, call management node and method are explained in further detail, and by way of example, with reference to the accompanying drawings wherein:
FIG. 1 shows an illustrative embodiment of the present system.
FIGs. 2a, 2b are flow charts illustrating an embodiment of the present method.

### DETAILED DESCRIPTION OF THE PRESENTSYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

More over, forthe purpose of clarify, detailed descriptions of well-know devices, systems, and methods are omitted so as not to obscure the description of the present system. Furthermore, routers, servers, nodes, base stations, gateways or other entities in a telecommunication network are not detailed as their implementation is beyond the scope of the present system and method.

Unless specified otherwise, the exemplary embodiment will be described here after in its application to a mobile device. This illustration is in no way a limitation of the scope of the present method and system as communication devices such as fixed devices or communication devices behind a PBX (Private Branch eXchange) may as well perform a group callas in the present method and system.

Furthermore, what will be referred to as a "call" in this description may be a standard voice call or any other communication session established between a first party, referred to as the first user, or the calling user, and q plurality of other parties referred to as the second users, or the called users. One will understand of course that the call is placed more precisely between the users telecommunication devices, i.e. the calling device and the called devices, for instance a video callbetween the first and second users, or data exchange between devices. Each side of the call in the telecommunication network will be referred to a branch ora leg of the call. The callmay also be referred to as a communication path between the devices. When a communication path is set up between both calling and called devices, different entities of the present telecommunication system, such as switc hing centers, are involved and this path generally involves a two level exchange mechanism:
- a signaling level corresponding to the signaling (or set up) messages exchanges through the network entities between communicaction devices,
- a media level for handling data, voice, etc.

Furthermore, the calling and called devices will also be referred to as end points as they represent both ends to the communication path.

In addition, it should be expressly understood that the drawings are included for illustrative purposes and do not represent the scope of the present system.

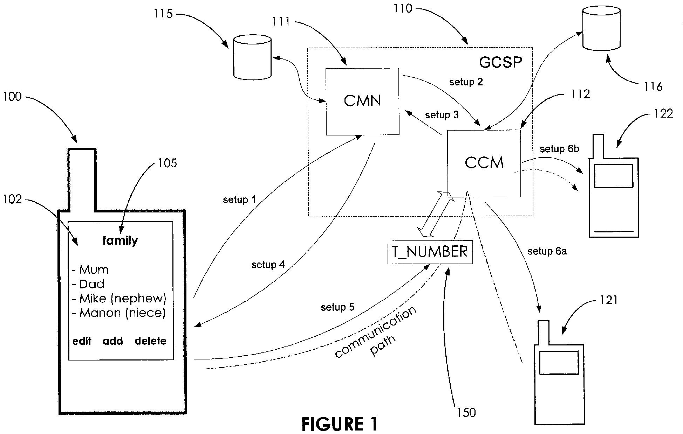

FIG. 1 shows an exemplary embodiment of the present system. A first device, or first end point, 100 is provided as the calling device. This device stores a plurality of contacts in a list of contacts, and the first user may have grouped some of them in communities 105 (in the illustration of FIG. 1, the community "FAMILY") in a similar way he/she adds contacts to his/her communication device. These generated communities may be stored on the device itself and/or on a subscriber identity module such as a SIM or USIM card.

The management of the communities may for instance be accessible to the use through a user interface 105 as illustrated in FIG. 1, offering the possibility for instance to edit, add or delete contacts of the community. The contacts in a given community 105 may be contact available in the list of contacts and/or new ones. These communities are similar to the notion of groups available on mobile devices to gather certain contacts with common characteristics to the user into groups.

A plurality of second devices, or second end point, is also provided in the present network. Only two are illustrated in FIG. 1 so as to not overload the figure. The here after method and system will be illustrated using the exemplary embodiment of FIG. 1, i.e. with two second devices 121 and 122. The person skilled in the art will generalize easily the present teaching to a groupe of called devices gather more than two devices. The second devices willbe also referred to as the called or recipient device. One may note that the called devices 121 or 122 may be any type of device, such as a mobile, a land or fixed line, etc.

The present system also comprises a group call service platform 110 (GCSP). This group call service platform 110 may:
- provide to the user of device 100 further management of his communities,
- process a group call from the calling device 100 so that the user of this device can present reach all contacts of the group.

Group call service platform 110 may comprise :
- a community manager (CMN) part or node 111 to manage the different communities created by the user. As explained here after, this community manager node 111 may also handle the initial phase of the group call setup between the calling device 100 and the recipient devices 121 and 122. As the present method may be offered through a group call service, the community manager 111 node maybe in charge of handling the subscription to this service for any users who wants the possibility of handling groupe call in a novel manner. As explained later on, a device agent may be downloaded from the community manager node 111 to the device 100 so that this device can implement the present method, thereby providing the profile management to the user,
- a call control (CCM) part or module 112 to handle the communication path between the first device 100 and the recipient devices of the group call. Such a node may be in charge of feature and service invocation in the proper order. This module further handles call setup and media mixing in communications. This module is a known module in today telecommunication networks and may be characterized through 2 main functions:
   a) a Call Control function that corresponds to the central function of a telephone switch. Call control offers different features such as decoding addressing information and routing telephone calls from one end point to another. It also creates added features such as "Call Waiting", "Call Forward on Busy", and "Do Not Disturb". This function handles the signaling level mentioned before in regards to the communication between the two devices,
   b) a Media function to handle the entire media part of a communication between two end points. This function corresponds to the over level, ie. the media level mentioned before.

In actual implementations of the call control module, the media function may not be part of the actual call control module but controlled by said call control module nonetheless.

One may note that illustrating the group call service platform 110 as comprising two parts is in no way limiting as these two parts could be hosted by the same node or server, or being operatively linked to each other. The two part presentation helps to illustrate the different tasks performed by the group call service platform 110 in the present system.

The group call service platform 110 may be implemented through an application embodied on a computer readable medium and running on a processor of a server node of the present system. The group call service platform 110 of the present system may comprise a processor operationally coupled to a memory, a display, a user input device and one or more interface devices. The memory may be any type of device for storing programming application data, such as to support the community managernode 111 and the call control module 112 functions. The programming application data and other data are received by the processor for configuring the processor to perform operation acts in accordance with the present method. The operation acts may also include controlling the display to display the ongoing group calls, or a group call setup message from a calling end point. The userinput device may include a keyboard, mouse, trackball, or other device, such as a touch sensitive display, or the likes. The user input device is operable for interacting with the processor including interaction within the memory and the databases 115 and/or 116 as well as subscription data of users, and/or other elements of the present system.

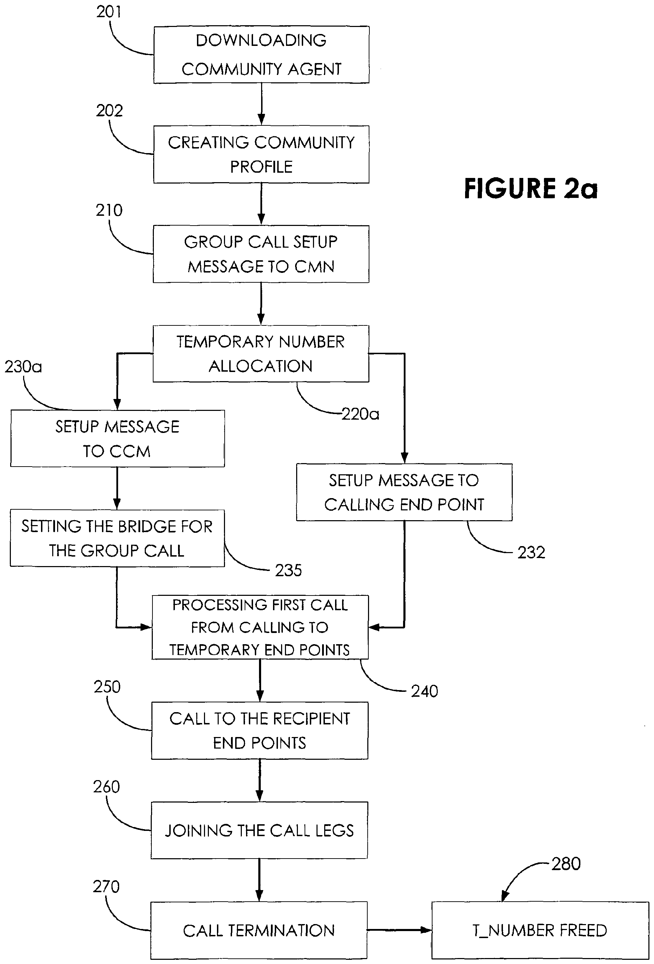

FIG. 2a is a flow chart illustrating an exemplary embodiment of the present method, wherein the first device 100 places a call to the community "family" comprising second devices 121 and 122 respectively.

In a first preliminary act 201, the user downloads a community call agent from the group call service platform 110. This agent may allow the following features:
- create a community profile of a community identified by the user. As mentioned earlier such a community may regroup people that the user identify as sharing some common characteristics, for instance his co-workers, people associated to the same project, his family, his closest friends, his workout partners, etc., the community profile may comprise, like a regular contact profile, data necessary to call the different contacts. Each community will regroup the list of devices or end points a user will try to reach through a groupe call to said community,
- edit, modify, and delete the existing community profiles, this may include for instance adding and removing contacts from an existing community profile,
- forward the community profiles, including any update, to the community manager node 111 so that this node 111 may store these profiles as explained hereafter,
- associating a community profile with a unique ID (identification or identifier) which is also forwarded to the community manager node 111, so that a community may be recognized in any group call setup message through this community ID. One may note that the ID may be provided by the community manager node 111 itself once it receives a new community profile. It may be indeed interesting to associate to a groupe call setup message the group ID instead of all the contacts information to limit the message overhead between the calling device 100 and the groupe call service platform 110,
- initiate a groupe call though sending a group call setup message, and subsequently call the temporary end point received from the community manager node 111 to establish the groupe call.

The community call agent may also be implemented through an application embodied on a computer readable medium and running on a processor of the first device 100 of the present system. This first device 100 of the present system may comprise a processor operationally coupled to a memory, a display, a user input device and one ormore interface devices. The memory may be any type of device for storing programming application data, suchasto support the community call agent features described here above. The programming application data and other data are received by the processor for configuring the processor to allow the first device 100 to perform the operation acts in accordance with the present method. The operation acts may also include controlling the display to manage the community profiles, forward these profiles to the group call service platform 110, associate a unique ID to a community profile, allow group calls, etc. The userinput device may include a keypad, a touch sensitive display, or other devices. The user input device is operable for the userto interact with the processor including interaction within the memory of the first device 100, and/or other elements of the present system.

In a further preliminary act 202, the user of the calling device creates a community from his contact list and/or by adding new contacts on his device. This may be achieved thanks to the community agent downloaded in act 201. The created community can be for instance the community family comprising both his parents, and corresponding respectively to devices 121 and 122. The user can at any time change the list of contacts in this community by adding/removing contacts. The community parents is stored in his phone.

In a further embodiment of the present method, the created community is associated to a unique community ID, and both the community profile itself and the unique ID are forwarded to the community manager node 111. In an alternative embodiment of the present method, the device 100 forward the community profile to the community manager node 111, which then associates the unique ID to the forwarded community profile. The community manager node then forward this unique community ID back to the device 100 for subsequent association to the community profile.

In other words, for these two additional embodiments, both the calling device 100 and the community manager node 111 store a table wherein the community profile and the unique ID are associated. Table 1 is an exemplary of such a table using the example of the community "family":

**Table 1: example of a community profile stored on the mobile and the community manager node**

| Community name | Community ID | Contact name | contact number |
|---|---|---|---|
| **FAMILY** | **ID 35QA** | Mother | +1 650 442 47 98 |
| | | Father | +1 303 442 47 98 |

The community profiles may be stored by the community manager node 111 in a community database 115 as illustrated in FIG. 1.

When the user wants to make a group call to any one of the communities he has created on his device 100, he will select one of these communities and will in further act of the present method place a group call to the selected community, for instance his family community.

Once a profile is selected, the user will place a call to the called device 120. As the user "dials" the selected community to reach the corresponding users, his device will actually sent a group call setup message to the profile manager node 111, the call setup message comprising at least one identifier, for instance contact data, forthe selected community (i.e. for the group of recipient end points). This dialing maybe achieved for instance in a similar way to calling a contact from a contact list, i.e. through hitting the call key on the calling device once the community is selected.

This groupe call is indeed initiated through the "setup 1" message as illustrated in FIG. 1. In an additional embodiment of the present method, the at least one identifier actually comprises a plurality of identifiers, one per contact in the group, each identifier corresponding to the contact data fora contact of the community. These contact data may for instance comprise each contact phone number which are passed on as parameters to the groupe call setup message.

In an alternative embodiment of the present invention, the at least one identifier for the community may be the unique community ID referred to earlier on. Thanks to this unique ID, the message overhead between the calling device 100 and the community manager node 111 is induced as node 111 can retrieve all the contact data (previously forwarded) from the stored community profile in community database 115.

In a further act 220a, once the community manager node 111 recognized from the group call setup message that the first user is requesting a groupe call, the community manager node will allocate a temporary end point 150 as illustrated in FIG. 1. This temporary end point corresponds to a pool of addresses in the present system dedicated/reserved for the group calls and that are allocated temporarily to each group call. This temporary end point (referred to here after as T_NUMBER) is used as an intermediary end point used to facilitate the communication path between the first device 100 and the recipient devices 121 and 122 of the contacts in the selected community. These temporary end points are known both from the community manager node 111 and the call control module 112. They may be allocated by one or the other. As they are reserved end points for the present system, the call control module 112, as explained here after, is adapted to recognize a callplaced to one of these temporary end points.

Indeed, these temporary end points are chosen so that any call placed to them by the first device 100 will be handled by the call control module 112. For instance the group call service platform 110 may be hosted in a given network operated by Operator A. Any group call placed to these temporary end points will be processed by the call control module 112. As explained here after, the call control module 112, through its different features, may process the calls to the temporary end points to facilitate the group calls from the first to the second devices.

In a further act 230a, the community manager node 111 will inform the call control module 112 that a temporary end point has been allocated to a call being currently placed from the first device to the group of second devices corresponding to the community. This setup message, illustrated as "setup 2" in FIG. 1 between the community manager node and the call control module, may comprise at least 2 parameters:
- contact data for all recipient end points from the selected community, this may for instance be their phone numbers, the contact data being either passed on in the group call setup message mentioned initially, or retrieve from community database 115 using this setup message,
- the temporary end point allocated for the group call. The temporary end point may be identified through its contact data in the present system. Other way to identify the allocated temporary end point may be readily available to the person skilled in the art as both the community manager node 111 and the call control module 112 have a common knowledge of these temporary end points.

Once the call control module 112 has received the "setup 2"message, it will establish a telecommunication bridge (act 235) for the group call using the temporary end point 150 as the contact to this bridge.

In an additional act 232, which may be carried out either prior to act 230a, simultaneously oraftersaid act, the community manager node 111 will inform the first device 100 that the temporary end point T_NUMBER has been allocated for the group call. This may be carried out through a set up message "setup 4" as illustrated in FIG. 1 to the calling device, this setup message comprising contact data for the allocated temporary end point. These contact data may be for instance a phone number to contact the temporary end point. In the embodiment of FIG. 2a, a setup message from the call control module 112 to the community manager node 111 is not required.

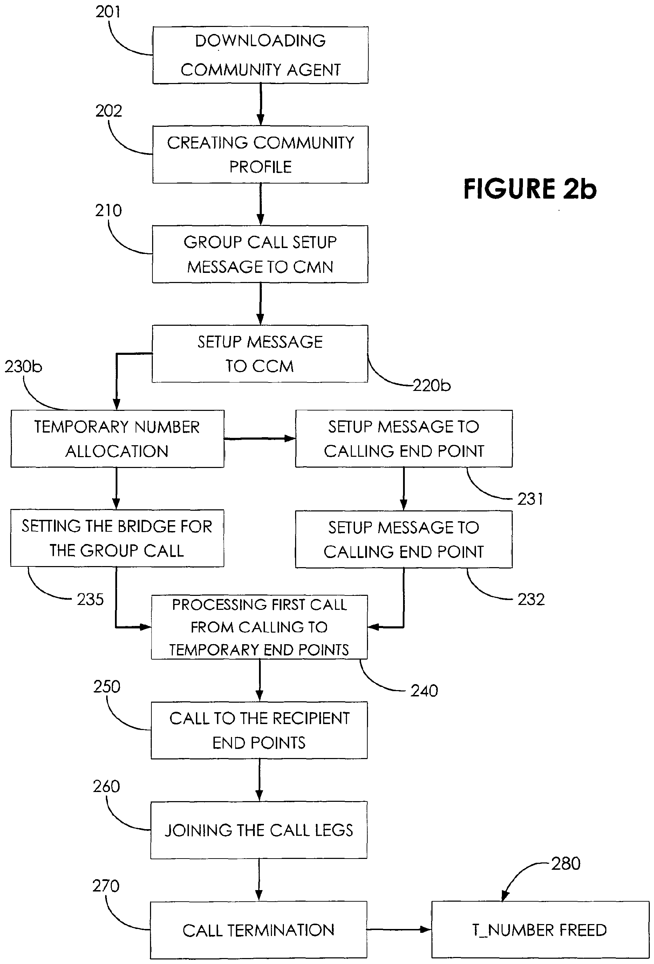

In an alternative embodiment of the present method illustrated in FIG. 2b, the allocation of T_NUMBER is carried out by the call control module 112. In this embodiment, acts 220a and 230a are swapped and become acts 220b and 230b respectively.

In this embodiment, the "setup 2" message may only comprise the contact data for all recipient end points of the group call. Acts 220b and 230b of FIG. 2b are thus permuted when compared to the embodiment of FIG. 2a, as the community manager node 111 sends "setup 2" message to call control module 112 (act 220b), which triggers (act 230b) the allocation of a temporary end point 150 by module 112. The temporary end point may be taken from a pool 116 of reserved temporary end points, as illustrated in FIG. 1. As in FIG. 2a, once the call control module 112 has received the "setup 2" message, it will establish a telecommunication bridge (act 235) for the group call using the allocated temporary end point 150 as the contact to this bridge.

As in the embodiment of FIG. 2a, the calling end point 100 will be informed of the allocated end point 150. This is achieved through acts 231 and 232. In act 231, the call control module 112 sends a setup message "setup 3" (as illustrated in FIG. 1) back to the community manager node 111. In a subsequent act 231, the community manager node 111 will inform the first device 100 that the temporary end point T_NUMBER has been allocated for its group call to the selected community. This may be carried out through a set up message "setup 4" as illustrated in FIG. 1 to the calling device. Both setup messages "setup 3" and "setup 4" will comprise contact data for the allocated temporary end point. These contact data may be for instance a phone number to contact the temporary end point. One may note that both acts 231 and 232 may only be carried out once the temporary end point has been allocated by the call control module 112, as illustrated in FIG. 2b.

Whether referring to the embodiments of FIG. 2a or 2b, the call control module 112 is aware that an incoming call to the allocated temporary number is about to be initiated, this incoming call being one leg of the group call between the first device 100 and the second devices.

In a further act 240 of the present method, once the first device 100 is informed of the allocated temporary end point, it will place a first call to the bridge corresponding to this allocated temporary end point, using the received contact data for said temporary end point. This may be initiated through a se tup message "setup 5" as illustrated in FIG. 1. This first call can be seen as the first leg of the group call.

As all temporary end points are known from call control module 112, this module, through its call control function in the present system, will process and recognize a call from the first device to the allocated temporary end point. Thanks to the acts 230a (FIG. 2a) and 230b (FIG. 2b), call control module 112 can identify the call to the allocated temporary end point T_NUMBER as a first leg of the group call between the first device and the groupe of second devices. This "awareness" of all temporary end points is illustrated with the large arrow between T_NUMBER 150 and call control module 112 in FIG. 1.

Once the first call is processed, the call control module 112 will in a subsequent act 250 place one second call per recipient device of the selected community, as known from the "setup 2" message of act 230a in FIG. 2a or act 220b in FIG. 2b. These second calls may be initiated through "setup 6a" and "setup 6b" messages as illustrated in FIG. 1, sent respectively to recipient end devices 121 and 122. These second calls are second legs of the groupe call.

Indeed, call control module 112, through its call control function, is adapted to process calls to the recipient end points. Each recipient end point from the selected community will receive the second call with the selected profile as the Caller ID. This second call corresponds to the second first leg of the call between the first and second devices.

When a user of a recipient device picks up the second call, the call control module 112 will join in a subsequent act 260 this second call with the first through the bridge "set up in act 235. Fo reach user of the group call that picks up the second call to his recipient device Once the second user picks up the call, the call control module 112 will, in a subsequent act 260, joint the first and second calls through the bridge established using T_NUMBER to generate a call between the calling end point and all recipient end points from the selected community. Thus the call legs will form communication paths between end points 100 on one side and 121 and 122 on the otherside.

Provided one of the contacts of the selected community does not answer the second call, or that the call is forwarded to an voice mail service, the corresponding second call may be dropped in an additional embodiment.

The calling end point 100 hangs up, a further setup message "setup 7" will terminate the call in the present system, as in act 270. If a recipient end point hangs up, provided other end points are still involved in the groupe call, the groupe call will not be terminated for the other users.

After the call termination, T_NUMBER will be freed and join the pool of available temporary end points for further allocation in a subsequent act 280. A record ("setup 8" message) of the call may be generated for subsequent billings of the calling end point 100.

In the present illustration, the setup messages may be for instance exchanged through data connection between the different entities. The different setup messages art used for setting up the communication path between the end points. Once the call legs are joined, in act 260, the actual call (as illustrated in dotted line between the end points 100, 121 and 122, and going through call control module 112), i.e. the media level of the call, will be handled by call control module 112. In other words, the communication path will go through call control module 112.

One may note that thanks to the present method, the first user may not be aware that acts 210 to 240 are carried out while he is simply calling the selected community.

In the present system, the device 100 may be adapted to cany the different acts 202, 210, and 240 through an agent running on this device. This agent may for instance be downloaded from the community manager node 111 when registering to the group call service. This agent will for instance allow:
- the user to create a community, as illustrated in FIG. 1 through a user interface 102, offering an "edit", "add", and "delete" functions. Other functions may be available to the user to offer more flexibility to community profile management,
- send update messages to the profile manager node 111 so that this node 111 can store a database of communities available to the user for subsequent group calls to the se communities,
- send the setup 1 message,
- process the "setup 4" message with the contact data for the temporary end point,
- place a call to T_NUMBER after receiving the "setup 4" message.

In the description here above, the call control module and community manager node may be seen as two subsystems or functions of the group call service platform. This platform could indeed implement both functions into one single application.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended spirit and scope of the present system as set forth in the claims that follow.

The section headings included herein are intended to facilitate a review but are not intended to limit the scope of the present system. Accordingly, the specifications and drawings are to be regarded in an illustrative manner and are not intended to limit the scope of the appended claims.

In interpreting the appended claims, it should be understood that:
a) the words "comprising:" or "including" do not exclude the presence of other elements or acts than those listed in a given claim;
b) the word "a" or"an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analogue and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable numberof elements.

## Claims

1. A method for establishing a group call. from a calling end point (100) to a group of recipient end points (121, 122), the method being carried out by a group call service node and comprising:
- receiving a group call setup message from the calling end point, the call setup message comprising at least one identifier for the group of recipient end points,
- sending to the calling end point contact data for a temporary end point (150) allocated to the calling end point,
- recognizing a first call placed from the calling end point to the temporary end point,
- placing second calls to each recipient end of the group of recipient end points using the at least one identifier,
- joining the first and second calls to generate a group call from the calling end point to each of the recipient end points.

2. The method of claim 1, wherein the group call setup message comprising one identifier per recipient end point of the group, and wherein the placing of the second call to a recipient end point uses the identifier corresponding to said recipient end point.

3. The method of claim 1, wherein the group call setup message comprising one identifier for the group of end points, and wherein the placing of the second calls uses contact data for the recipient end points retrieved through the identifier for the group.

4. A group call service platform (110) for establishing a group call from a calling end point (100) to a group of recipient end points (121, 122), the platform being arranged to:
- receive a group call setup message from the calling end point, the group call setup message comprising at least one identifier for the group of recipient end points,
- send contact data to the calling end point for a temporary end point (150) allocated to the calling end point,
- recognize a first call placed from the calling end point to the temporary end point,
- place second calls to each recipient end of the group of recipient end points using the at least one identifier,
- join the first and second calls to generate a group call from the calling end point to each of the recipient end points.

5. A telecommunication system comprising:
- a group of recipient end points (121, 122),
- a calling end point (100), and,
- a group call service platform (110) for establishing a group call from the calling end point to the group of recipient end points,
the calling end point being arranged to:
- send a group call setup message, the group call setup message comprising at least one identifier for the group of recipient end points,
- receive contact data for a temporary end point (150) allocated to the group call,
- call the temporary end point,
the group call service platform being arranged to:
- receive the group call setup message from the calling end point,
- send the contact data for the temporary end point allocated to the calling end point to the calling end point,
- recognize the call from the calling end point placed to the temporary end point,
- place second calls to each recipient end of the group of recipient end points using the at least one identifier,
- join the call from the calling end point and the second calls to generate a group call from the calling end point to each of the recipient end points.

6. An application embodied on a computer readable medium when run on a processor of a group call service platform according to claim 4 arranged to establish a group call from a calling end point (100) to a group of recipient end points (121, 122), the application comprising:
- a portion to receive a group call setup message from the calling end point, the group call setup message comprising at least one identifier for the group of recipient end points,
- a portion to send to the calling end point contact data for a temporary end (150) point allocated to the calling end point,
- a portion to recognize a first call placed from the calling end point to the temporary end point,
- a portion to place second calls to each recipient end of the group of recipient end points using the at least one identifier,
- a portion to join the first and second calls to generate a group call from the calling end point to each of the recipient end points.

## Patentansprüche

1. Verfahren zum Aufbauen eines Gruppenrufs von einem rufenden Endpunkt (100) zu einer Gruppe von Empfängerendpunkten (121, 122), wobei das Verfahren durch einen Gruppenrufdienstknoten ausgeführt wird und Folgendes umfasst:
- Empfangen einer Gruppenrufaufbaunachricht von dem rufenden Endpunkt, wobei die Rufaufbaunachricht wenigstens eine Kennung für die Gruppe von Empfängerendpunkten umfasst,
- Senden zu dem rufenden Endpunkt Kontaktdaten für einen temporären Endpunkt (150), der dem rufenden Endpunkt zugewiesen ist,
- Erkennen eines ersten Rufs, der von dem rufenden Endpunkt zu dem temporären Endpunkt durchgeführt wird,
- Platzieren zweiter Rufe zu jedem Empfängerende aus der Gruppe der Empfängerendpunkte unter Verwendung der wenigstens einen Kennung,
- Zusammenfügen des ersten und der zweiten Rufe, um einen Gruppenruf von dem rufenden Endpunkt zu jedem aus den Empfängerendpunkten zu erzeugen.

2. Verfahren nach Anspruch 1, wobei die Gruppenrufaufbaunachricht eine Kennung pro Empfängerendpunkt der Gruppe umfasst und wobei das Platzieren des zweiten Rufs zu einem Empfängerendpunkt der Kennung verwendet, die dem Empfängerendpunkt entspricht.

3. Verfahren nach Anspruch 1, wobei die Gruppenrufaufbaunachricht eine Kennung für die Gruppe von Endpunkten umfasst und wobei das Platzieren der zweiten Rufe Kontaktdaten für die Empfängerendpunkte, die über die Kennung für die Gruppe abgefragt werden, verwendet.

4. Gruppenrufdienstplattform (110) zum Aufbauen eines Gruppenrufs von einem rufenden Endpunkt (100) zu einer Gruppe von Empfängerendpunkten (121, 122), wobei die Plattform ausgelegt ist:
- eine Gruppenrufaufbaunachricht von dem rufenden Endpunkt zu empfangen, wobei die Gruppenrufaufbaunachricht wenigstens eine Kennung für die Gruppe von Empfängerendpunkten umfasst,
- Kontaktdaten zu dem rufenden Endpunkt für einen temporären Endpunkt (150), der dem rufenden Endpunkt zugewiesen ist, zu senden,
- einen ersten Ruf, der von dem rufenden Endpunkt zu dem temporären Endpunkt platziert wird, zu erkennen,
- zweite Rufe zu jedem Empfängerende aus der Gruppe der Empfängerendpunkte unter Verwendung der wenigstens einen Kennung zu platzieren,
- den ersten und die zweiten Rufe zusammenzufügen, um einen Gruppenruf von dem rufenden Endpunkt zu jedem aus den Empfängerendpunkten zu erzeugen.

5. Telekommunikationssystem, das Folgendes umfasst:
- eine Gruppe von Empfängerendpunkten (121, 122),
- einen rufenden Endpunkt (100), und
- eine Gruppenrufdienstplattform (110) zum Aufbauen eines Gruppenrufs von dem rufenden Endpunkt zu der Gruppe von Empfängerendpunkten,
wobei der rufende Endpunkt ausgelegt ist:
- eine Gruppenrufaufbaunachricht zu senden, wobei die Gruppenrufaufbaunachricht wenigstens eine Kennung für die Gruppe von Empfängerendpunkten umfasst,
- Kontaktdaten für einen temporären Endpunkt (150), der dem Gruppenruf zugewiesen ist, zu empfangen,
- den temporären Endpunkt zu rufen,
wobei die Gruppenrufdienstplattform ausgelegt ist:
- die Gruppenrufaufbaunachricht von dem rufenden Endpunkt zu empfangen,
- die Kontaktdaten für den temporären Endpunkt, der dem rufenden Endpunkt zugewiesen ist, zu dem rufenden Endpunkt zu senden,
- den Ruf von dem rufenden Endpunkt, die für den temporären Endpunkt platziert ist, zu erkennen,
- zweite Rufe zu jedem Empfängerende aus der Gruppe der Empfängerendpunkte unter Verwendung der wenigstens einen Kennung zu platzieren,
- den Ruf von dem rufenden Endpunkt und die zweiten Rufe zusammenzufügen, um einen Gruppenruf von dem rufenden Endpunkt zu jedem aus den Empfängerendpunkten zu erzeugen.

6. Anwendung, die auf einem computerlesbaren Medium enthalten ist, die dann, wenn sie auf einem Prozessor einer Gruppenrufdienstplattform nach Anspruch 4 abläuft, ausgelegt ist, einen Gruppenruf von einem rufenden Endpunkt (100) zu einer Gruppe von Empfängerendpunkten (121, 122) aufzubauen, wobei die Anwendung Folgendes umfasst:
- einen Abschnitt zum Empfangen einer Gruppenrufaufbaunachricht von dem rufenden Endpunkt, wobei die Gruppenrufaufbaunachricht wenigstens eine Kennung für die Gruppe von Empfängerendpunkten umfasst,
- einen Abschnitt zum Senden zu dem rufenden Endpunkt von Kontaktdaten für einen temporären Endpunkt (150), der dem rufenden Endpunkt zugewiesen ist,
- einen Abschnitt zu Erkennen eines ersten Rufs, der von dem rufenden Endpunkt zu dem temporären Endpunkt platziert wird,
- einen Abschnitt zum Platzieren zweiter Rufe zu jedem Empfängerende aus der Gruppe der Empfängerendpunkte unter Verwendung der wenigstens einen Kennung,
- einen Abschnitt zum Zusammenfügen des ersten und der zweiten Rufe, um einen Gruppenruf von dem rufenden Endpunkt zu jedem aus den Empfängerendpunkten zu erzeugen.

## Revendications

1. Procédé pour établir un appel de groupe depuis un point d'extrémité appelant (100) vers un groupe de points d'extrémité de destination (121, 122), le procédé étant mis en oeuvre par un noeud de service d'appel de groupe et comprenant les étapes suivantes :
- recevoir un message d'établissement d'appel de groupe depuis le point d'extrémité appelant, le message d'établissement d'appel comprenant au moins un identifiant pour le groupe de points d'extrémité de destination,
- envoyer au point d'extrémité appelant des données de contact pour un point d'extrémité temporaire (150) alloué au point d'extrémité appelant,
- reconnaître un premier appel passé depuis le point d'extrémité appelant au point d'extrémité temporaire,
- passer des deuxièmes appels à chaque extrémité de destination du groupe de points d'extrémité de destination en utilisant l'au moins un identifiant,
- joindre les premier et deuxièmes appels pour générer un appel de groupe depuis le point d'extrémité appelant vers chacun des points d'extrémité de destination.

2. Procédé selon la revendication 1, dans lequel le message d'établissement d'appel de groupe comprend un identifiant par point d'extrémité de destination du groupe, et dans lequel passer le deuxième appel à un point d'extrémité de destination utilise l'identifiant correspondant audit point d'extrémité de destination.

3. Procédé selon la revendication 1, dans lequel le message d'établissement d'appel de groupe comprend un identifiant pour le groupe de points d'extrémité, et dans lequel passer les deuxièmes appels utilise des données de contact pour les points d'extrémité de destination récupérés par l'intermédiaire de l'identifiant pour le groupe.

4. Plate-forme de service d'appel de groupe (110) pour établir un appel de groupe depuis un point d'extrémité appelant (100) vers un groupe de points d'extrémité de destination (121, 122), la plate-forme étant arrangée pour :
- recevoir un message d'établissement d'appel de groupe depuis le point d'extrémité appelant, le message d'établissement d'appel de groupe comprenant au moins un identifiant pour le groupe de points d'extrémité de destination,
- envoyer des données de contact au point d'extrémité appelant pour un point d'extrémité temporaire (150) alloué au point d'extrémité appelant,
- reconnaître un premier appel passé depuis le point d'extrémité appelant au point d'extrémité temporaire,
- passer des deuxièmes appels à chaque extrémité de destination du groupe de points d'extrémité de destination en utilisant l'au moins un identifiant,
- joindre les premier et deuxièmes appels pour générer un appel de groupe depuis le point d'extrémité appelant vers chacun des points d'extrémité de destination.

5. Système de télécommunication comprenant :
- un groupe de points d'extrémité de destination (121, 122),
- un point d'extrémité appelant (100), et
- une plate-forme de service d'appel de groupe (110) pour établir un appel de groupe depuis le point d'extrémité appelant vers le groupe de points d'extrémité de destination,
le point d'extrémité appelant étant arrangé pour :
- envoyer un message d'établissement d'appel de groupe, le message d'établissement d'appel de groupe comprenant au moins un identifiant pour le groupe de points d'extrémité de destination,
- recevoir des données de contact pour un point d'extrémité temporaire (150) alloué à l'appel de groupe,
- appeler le point d'extrémité temporaire,
la plate-forme de service d'appel de groupe étant arrangée pour :
- recevoir le message d'établissement d'appel de groupe depuis le point d'extrémité d'appel,
- envoyer les données de contact pour le point d'extrémité temporaire alloué au point d'extrémité appelant au point d'extrémité appelant,
- reconnaître l'appel depuis le point d'extrémité appelé passé au point d'extrémité temporaire,
- passer des deuxièmes appels à chaque extrémité de destination du groupe de points d'extrémité de destination en utilisant l'au moins un identifiant,
- joindre l'appel provenant du point d'extrémité appelant et les deuxièmes appels pour générer un appel de groupe depuis le point d'extrémité appelant vers chacun des points d'extrémité de destination.

6. Application intégrée sur un support lisible par ordinateur qui, lorsqu'elle est exécutée sur un processeur d'une plate-forme de service d'appel de groupe selon la revendication 4, est arrangée pour établir un appel de groupe depuis un point d'extrémité appelant (100) vers un groupe de points d'extrémité de destination (121, 122), l'application comprenant :
- une partie pour recevoir un message d'établissement d'appel de groupe depuis le point d'extrémité appelant, le message d'établissement d'appel de groupe comprenant au moins un identifiant pour le groupe de points d'extrémité de destination,
- une partie pour envoyer au point d'extrémité appelant des données de contact pour un point d'extrémité temporaire (150) alloué au point d'extrémité appelant,
- une partie pour reconnaître un premier appel passé depuis le point d'extrémité appelant au point d'extrémité temporaire,
- une partie pour passer des deuxièmes appels à chaque extrémité de destination du groupe de points d'extrémité de destination en utilisant l'au moins un identifiant,
- une partie pour joindre les premier et deuxièmes appels pour générer un appel de groupe depuis le point d'extrémité appelant vers chacun des points d'extrémité de destination.
